# EUROPÄISCHE PATENTSCHRIFT

(11) **EP 2 758 807 B1**
(45) Veröffentlichungstag und Bekanntmachung des Hinweises auf die Patenterteilung: **22.08.2018**
(21) Anmeldenummer: 12773240.2
(22) Anmeldetag: 13.09.2012
(51) Int. Cl.: G01V 1/20

(54) **TRÄGERMODUL FÜR EINE UNTERWASSERANTENNE SOWIE UNTERWASSERANTENNE MIT DERARTIGEM TRÄGERMODUL**
SUPPORT MODULE FOR AN UNDERWATER ANTENNA, AND UNDERWATER ANTENNA HAVING A SUPPORT MODULE OF THIS KIND
MODULE SUPPORT POUR UNE ANTENNE SOUS-MARINE ET ANTENNE SOUS-MARINE POURVUE D'UN MODULE SUPPORT DE CE TYPE

(30) Priorität: 20.09.2011 DE 102011113811
(43) Veröffentlichungstag der Anmeldung: 30.07.2014
(73) Patentinhaber: ATLAS ELEKTRONIK GmbH, 28309 Bremen (DE)
(72) Erfinder: JUNGE, Wilfried, 28309 Bremen (DE); MINSCHKE, Mike, 28332 Achim (DE)
(74) Vertreter: thyssenkrupp Intellectual Property GmbH
(86) Internationale Anmeldenummer: PCT/EP2012/067935
(87) Internationale Veröffentlichungsnummer: WO 2013/041437

(56) Entgegenhaltungen:
- EP-A1- 2 381 274
- EP-A2- 1 426 787
- US-A- 3 675 193
- US-A- 5 867 451
- US-A1- 2001 035 311
- US-A1- 2005 146 984
- US-A1- 2007 195 648

## Beschreibung

Die Erfindung betrifft ein Trägermodul der im Oberbegriff von Anspruch 1 genannten Art, eine akustische Unterwasserantenne gemäß dem Oberbegriff von Anspruch 9 sowie ein Verfahren zum Befestigen eines Trägermoduls gemäß dem Oberbegriff von Anspruch 12. In der Wasserschalltechnik werden üblicherweise Peilanlagen mit einer von einem Wasserfahrzeug aus nachgeschleppten Schleppantenne als Empfänger für Wasserschallsignale eingesetzt, welche bei Nichtgebrauch auf eine bordfeste Trommel aufgewickelt wird. Derartige Schleppantennen weisen eine beträchtliche Länge auf, um über große Entfernungen Ziele zu detektieren und zu peilen.

Aus DE 69 429 586 T2 ist eine aus mehreren mechanisch und elektrisch verbundenen Sektionen aufgebaute Schleppantenne bekannt, die eine Vielzahl von Hydrophonträgern zum Befestigen der Hydrophone in der Schleppantenne aufweist. Dazu sind die Hydrophonträger in eine als elastischer Schlauch ausgebildeten Antennenhülle eingezogen, die mit einem Füllmittel gefüllt ist, um die Dichte der Schleppantenne im Wesentlichen der Dichte des Seewassers anzugleichen.

Die Hydrophonträger sind in Längsrichtung beabstandet in der Schleppantenne angeordnet und bilden somit ein Skelett, welches die Kräfte, die auf die Schleppantenne wirken, aufnimmt und ein zentrales Zugseil durch diese Träger hindurchführt.

Die üblicherweise verwendeten Wandler einer Schleppantenne weisen ein einzelnes Wandlerelement, insbesondere Hydrophon, auf und sind rundum druckempfindlich, wodurch sich jeweils eine kugelförmige Richtcharakteristik ergibt. Mit einem Richtungsbildner werden die Empfangssignale der Wandler zu Gruppensignalen zusammengefasst, deren Richtcharakteristiken seitlich zur Schleppantenne in unterschiedliche Richtungen weisen. Es lässt sich somit zwar eine gute Bündelung der Richtcharakteristik quer zur Längsrichtung der Schleppantenne erzielen, die Empfindlichkeit in Radialrichtung ist jedoch gleichmäßig. Dadurch ist es nicht möglich eine Rechts-Links-Unterscheidung eines aufgefassten Ziels vorzunehmen.

Eindeutige Peilergebnisse lassen sich bspw. mit einem Wandler bestehend aus drei Wandlerelementen erzielen, wobei die Wandlerelemente in einem gleichen Radialabstand zur Längsachse und gegeneinander um gleiche Umfangswinkel versetzt angeordnet sind. Die Empfangsignale von je zwei der drei Wandlerelemente werden zeitverzögert zu einem Empfangsignal des Wandlers aufgenommen. Mit derartigen Empfangssignalen aller Wandler werden Richtcharakteristiken der Schleppantenne gebildet, deren Hauptempfangsrichtungen jeweils zu einer Seite weisen. Eine derartige signaltechnische Zusammenfassung der Empfangssignale von drei einzelnen Wandlerelementen eines Wandlers ist in DE 31 51 028 C2 aufgezeigt.

Aufgrund der gemessenen Zeitverzögerungen zwischen allen drei Wandlerelement-Paaren kann die Links-Rechts-Mehrdeutigkeit gelöst werden, unabhängig von einer Drehung der Schleppantenne. Diese Methode erfordert jedoch relativ große Abstände zwischen den Wandlerelementen, um messbare Zeitverzögerungen zu erhalten.

Akustische Schleppantennen finden auch in der seismischen Meeresforschung Anwendung. US 5 867 451 zeigt eine seismische Seekabeleinrichtung, umfassend ein Kabel, Hydrophongehäuse, Auftriebsfüllmittel und einen äußeren Schutzmantel, wobei das Kabel ein tragendes Faserbündel, Datenübertragungsleitungen, elektrische Stromleiter, Lichtwellenleiter und einen Schutzmantel aufweist. Die Hydrophongehäuse sind einzeln beabstandet um das Kabel angeordnet.

Ferner zeigt US 3 675 193 einen seismischen Hydrophonstreamer, welcher unter Verwendung von Hydrophonen aus zylindrischen Kristallsegmenten ausgebildet ist, wobei die Kristallsegmente mit ihrer Achse quer zur Achse des Streamerkabels angeordnet sind. Es ist ein Befestigungsmittel vorgesehen, welches von außen an einem zentralen Zugkabel befestigt wird und den Kristall parallel zur Achse des Zugseils stützt.

Weitere interne Vorrichtungen für eine Unterwasserkabel-Anordnung sind aus EP 1 426 787 bekannt. Der Erfindung liegt nach alledem das Problem zugrunde, bei möglichst geringem Durchmesser der Schleppantenne deren akustische Eigenschaften zu verbessern.

Die Erfindung löst dieses Problem durch die Merkmale eines Trägermoduls für eine akustische Unterwasserantenne gemäß Anspruch 1, durch eine Unterwasserantenne gemäß Anspruch 9 sowie durch die Merkmale eines entsprechenden Verfahrens zum Befestigen eines Trägermoduls gemäß Anspruch 12. Die Erfindung stellt den Vorteil bereit, durch eine besondere Ausgestaltung des Trägermoduls einen symmetrischen Aufbau des Wandlers zu schaffen, mit dem trotz einer Verringerung des Abstandes zwischen den Wandlerelementen gute akustische Eigenschaften erzielt werden. Dazu weist das Trägemodul ein aus einem Kernstück und wenigstens drei Einzelelementen bestehendes Formstück auf, wobei die Einzelelemente zum Aufnehmen von jeweils einem Wandlerelement dienen, die zu einem Wandler zusammengefasst werden.

Eine zentrale axiale Öffnung in dem Formstück ermöglicht ein Durchführen eines Zugseils der Schleppantenne, welches die Zugkraft über die Antenne verteilt.

Zwischen den Teilen des Formstücks befindet sich eine lösbare Verbindung zum Öffnen des Trägermoduls, um dieses auf das Zugseil anzubringen, und zum Schließen des Trägermoduls nach dem Aufsetzen auf dem Zugseil.

Mit dem erfindungsgemäßen Trägermodul lassen sich akustische Probleme vermeiden, die auf unsymmetrische Trägerformen zurückzuführen sind. Dadurch lassen sich vorteilhaft die Abstände der Wandlerelemente verringern, da diese bei einem derartigen symmetrischen Aufbau des Trägermoduls wesentlich bessere akustische Eigenschaften aufweisen.

Ferner weist das Trägermodul eine dem Wandler zugeordnete Elektronikbaugruppe für eine Signalverarbeitung der Empfangssignale der Wandlerelemente auf. Erfindungsgemäß ist die Elektronikbaugruppe radial um das Formstück angeordnet, so dass das Trägermodul nicht nur zur mechanischen Stabilisierung der Schleppantenne und zur Aufnahme der Wandlerelemente dient, sondern auch zur Halterung von Elektronikbauteilen. Durch eine derartige Anordnung der Elektronikbaugruppe auf dem Trägermodul lassen sich vorteilhaft die Abstände zwischen den Wandlern der Schleppantenne minimieren, da keine zusätzlichen Formstücke zur Aufnahme der benötigten Elektronik erforderlich sind. Ein minimierbarer Abstand zwischen den Wandlern hat den Vorteil, dass die Empfangsfrequenz der Schleppantenne zu höheren Frequenzen hin verschoben werden kann. Erfindungsgemäß ist die Elektronikbaugruppe als Leiterplatten ausgebildet, welche direkt mit den Wandlern zugehörigen Elektronikbauteilen bestückt sind. Ferner sind die Leiterplatten mit einem Leiterbahnen enthaltenen, flexiblen Band verbunden. Dies ermöglicht vorteilhaft die platzsparende Anordnung radial um das Formstück. Erfindungsgemäß sind wenigstens drei Wandlerelemente gegeneinander um einen gleichen Umfangswinkel versetzt auf dem Formstück angeordnet und weisen jeweils einen gleichen Querabstand zur Längsachse des Trägermoduls auf. Bevorzugt ist jedes Wandlerelement auf einem Teil des Formstücks angebracht, wobei die Teile des Formstücks lösbar miteinander verbunden sind. Durch eine derartige Wandleranordnung, bei der wenigstens drei Wandlerelemente zusammengefasst werden, entsteht der Vorteil, eine Rechts-Links-Unterscheidung eines erfassten Zieles treffen zu können.

In einer weiteren Ausführungsform der Erfindung sind die Wandlerelemente elastisch auf dem Formstück befestigt. Eine derartige elastische Befestigung hat den Vorteil einer Körperschallentkopplung, welche die akustischen Eigenschaften der Antenne verbessert. Erfindungsgemäß ist das Formstück aus einem Kernstück und Einzelelementen zum Aufnehmen von jeweils einem Wandlerelement aufgebaut. Zwischen den Einzelelementen und dem Kernstück besteht eine lösbare Verbindung. Bevorzugt sind die Einzelelemente identisch aufgebaut, so dass die Wandlerelemente einer Gruppe bzw. eines Wandlers aufgrund der gleichen Umgebung die gleichen akustischen Eigenschaften aufweisen. Die lösbare Verbindung hat den Vorteil, dass das Formstück durch das Lösen mindestens eines Einzelelementes geöffnet werden kann und somit auf ein Zugseil aufgesetzt werden kann.

Gemäß einer weiteren bevorzugten Ausführungsform der Erfindung weist das Trägermodul Abstandshalter zwischen dem Kernstück und den Einzelelementen auf. Diese haben den Vorteil, beim Anbringen der Einzelelemente an dem Kernstück einen Zwischenraum herzustellen, in dem die Wandlerelemente platziert werden.

In einer weiteren Ausführungsform der Erfindung weist das Kernstück eine Abdeckung zum Verschließen der axialen Öffnung auf, wobei die Abdeckung an dem Kernstück befestigbar ist. Die Abdeckung wird bevorzugt über die Länge des Kernstücks auf diesem angebracht, um vorteilhafter Weise das Zugseil am Herausrutschen aus dem Kernstück zu hindern.

In einer weiteren Ausführungsform der Erfindung weist das Trägermodul ein Modulgehäuse auf. Bevorzugt ist dieses Modulgehäuse aus Gehäusehälften, insbesondere zwei Halbschalen, zusammengesetzt. Es hat den Vorteil, das Formstück, insbesondere das Kernstück, mit der daran angebrachten Elektronikbaugruppe vor mechanischer Beanspruchung zu schützen.

In einer weiteren bevorzugten Ausführungsform der Erfindung weist das Trägermodul ein oder mehrere Klettbänder zum Zusammenhalten des Modulgehäuses auf. Dieser Aufbau hat den Vorteil, dass durch die Klettbänder eine akustische Entkopplung des Trägermoduls zur Schlauchwand der Antenne entsteht, wodurch die akustischen Eigenschaften der Antenne verbessert werden.

Gemäß einer weiteren Ausführungsform der Erfindung weist das Trägermodul einen Basisträger auf, welcher derart ausgebildet ist, um das Trägermodul auf dem Zugseil zu befestigen. Dazu wird der Basisträger zunächst an dem Zugseil festgeschraubt und dann mit diesem verklebt. Die Befestigung des Trägermoduls an dem Zugseil mittels eines Basisträgers hat den Vorteil, dass ein einfacher Austausch eines Trägermoduls im Rahmen von Wartungsarbeiten möglich ist. Das Trägermodul wird mit mindestens einer Schraube am Basisträger gegen Verdrehen fixiert.

In einer weiteren bevorzugten Ausführungsform der Erfindung weist das Trägermodul Aussparungen in der axialen Öffnung des Formstücks auf. Das hat den Vorteil, zusätzlich zum Zugseil der Schleppantenne auch Stromversorgungsleitungen und Signalleitungen der Wandlerelemente durch das Trägermodul führen zu können.

Ferner weist die Erfindung eine akustische Unterwasserantenne, insbesondere Schleppantenne eine schlauchförmige Außenhaut und in Längsrichtung ein Zugseil auf, an dem wenigstens ein vorstehend beschriebenes Trägermodul angeordnet ist. Bevorzugt sind die Trägermodule im Wesentlichen zylindrisch ausgebildet und weisen einen Außendurchmesser auf, der geringfügig kleiner als der Innendurchmesser der Außenhaut der Unterwasserantenne ist. Das hat den Vorteil, dass die Trägermodule in die schlauchförmige Außenhülle eingezogen werden können und somit der Schleppantenne die zylindrische Form geben.

In einer weiteren alternativen Ausführungsform der Erfindung weist die akustische Unterwasserantenne eine Anordnung von vorstehend beschriebenen Trägermodulen und Leermodulen in Längsrichtung der Unterwasserantenne auf. Dabei besteht das Leermodul lediglich aus einem Formstück ohne Wandlerelemente und dient vorzugsweise der Formgebung und Stabilität der Antenne für den Fall, dass größere Wandlerabstände in Längsrichtung für den Antennenaufbau benötigt werden. Ferner besteht durch die Verwendung von Leermodulen der Vorteil, beim Aufwickeln der Antenne auf eine Trommel Deformationen des Schlauches zu vermeiden.

Eine weitere alternative Ausführungsform der Erfindung zeigt ein Verfahren zum Befestigen des Trägermoduls auf dem Zugseil der Schleppantenne. Dazu wird zunächst durch Lösen der zum Öffnen notwendigen Verbindungen zwischen den einzelnen Teilen des Formstücks das Trägermodul geöffnet, um dieses auf das Zugseil oder auf einem mit dem Zugseil verbundenen Basisträger aufzusetzen. Nach einem Fixieren des Trägermoduls an dem Zugseil, wird das Trägermodul anschließend durch Verbinden der einzelnen Teile des Formstücks geschlossen.

Weitere vorteilhafte Ausführungsformen der Erfindung ergeben sich aus den Unteransprüchen sowie aus den anhand der anliegenden Zeichnung erläuterten Ausführungsbeispielen. In der Zeichnung zeigen:
- Fig. 1: ein Wasserfahrzeug mit einer nachgeschleppten Schleppantenne,
- Fig. 2: eine Seitenansicht eines Trägermoduls gemäß der Erfindung,
- Fig. 3: eine Draufsicht eines Trägermoduls gemäß der Erfindung ohne die Darstellung von Einzelelementen des Formstücks,
- Fig. 4: eine Draufsicht eines Trägermoduls gemäß der Erfindung,
- Fig. 5: eine Draufsicht einer in die Blattebene gelegten Elektronikbaugruppe und
- Fig. 6: ein Trägermodul gemäß der Erfindung in einer perspektivischen Ansicht.

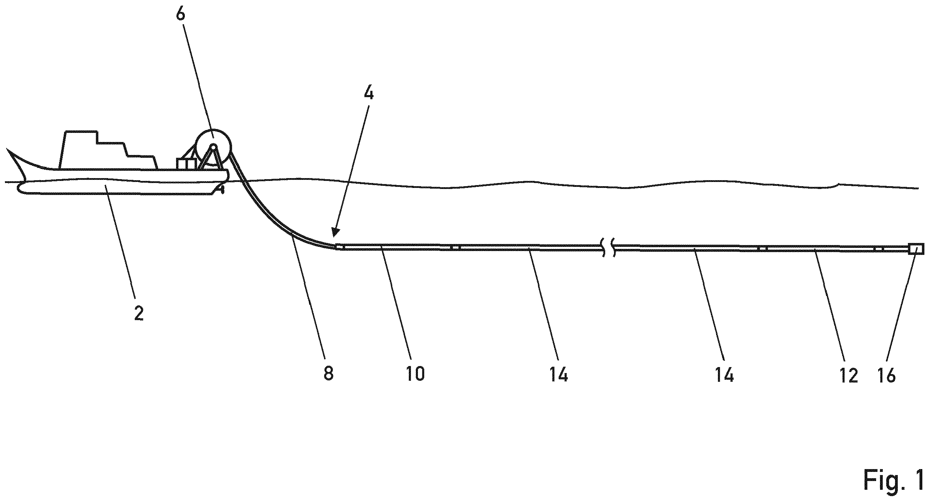

Fig. 1 zeigt eine von einem Wasserfahrzeug 2 nachgeschleppte Schleppantenne 4. Das Wasserfahrzeug 2 kann dabei ein Überwasserschiff oder ein Unterwasserfahrzeug, wie bspw. ein U-Boot, sein.

Mit einer am Bord des Wasserfahrzeugs 2 befindlichen Trommel 6 wird die Schleppantenne 4 eingeholt und ausgebracht. Die Schleppantenne 4 weist ein Schleppkabel 8, zwei Dämpfungsmodule 10, 12 sowie einen dazwischenliegenden Akustikteil 14 auf. Die Dämpfungsmodule 10, 12 dienen dabei der mechanischen Schwingungsentkopplung des Akustikteils 14. Am Ende der Schleppantenne 4 befindet sich ferner eine Schleppbremse 16, die beim Nachziehen für eine gewisse Zugspannung entgegen der Schlepprichtung an der Schleppantenne 4 sorgt.

In frei wählbaren Abständen befinden sich Trägermodule in der Schleppantenne 4. Diese dienen der Formstabilisierung der Schleppantenne 4 sowie zur Unterbringung der Wandlerelemente und Elektronikbaugruppen.

Ferner ist die Schleppantenne 4 von einem Zugseil sowie Signalleitungen für die Empfangssignale der Wandlerelemente durchzogen, an dem die Trägermodule axial unverschieblich befestigt sind. Zum Schutz gegen Seewasser werden die Trägermodule in eine elastische, zugfeste, schlauchförmige Außenhülle gezogen. Zur Erleichterung des Vorgangs weisen die Trägermodule dazu einen Außendurchmesser auf, der geringfügig kleiner als der Innendurchmesser der Außenhülle der Schleppantenne 4 ist. Der so erzeugte Schlauch ist vorzugsweise mit Öl oder einem Gel gefüllt, um die Schwimmfähigkeit der Antenne zu gewährleisten.

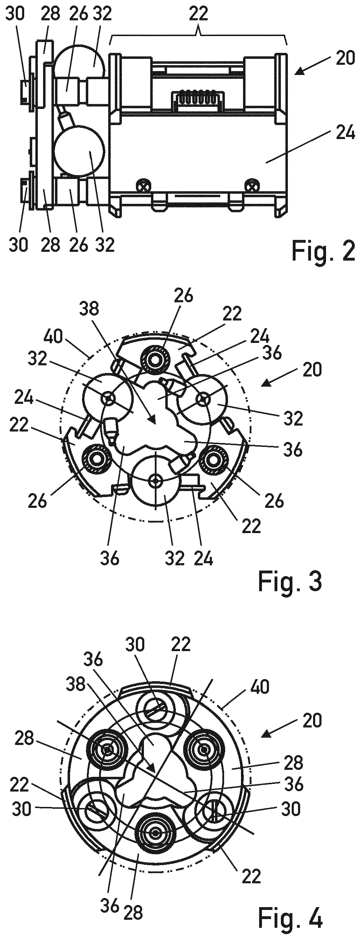

Fig. 2 zeigt eine schematische Darstellung eines Trägermoduls gemäß der Erfindung in einer Seitenansicht. Das Trägermodul 20 weist ein aus mehreren Teilen bestehendes, im Wesentlichen zylindrisches Formstück auf, wobei diese Teile lösbar miteinander verbunden sind. Ein Kernstück 22 dient in erster Linie der Formgebung und der Aufnahme einer Elektronikbaugruppe 24, welche radial um das Kernstück 22 angeordnet ist. Bevorzugt sind die Formstücke aus synthetisch, technisch verwendbarem Kunststoff, insbesondere Polyamid, gefertigt.

Über Abstandshalter 26 sind drei identisch aufgebaute Einzelelemente 28 mit dem Kernstück 22 verbunden, wobei mittels Schrauben 30 eine lösbare Verbindung gebildet wird. Dieses Ausführungsbeispiel zeigt die Anbringung der drei Einzelelementen 28 auf einer Seite des Kernstücks 22. Die Erfindung ist jedoch nicht auf einen derartigen Aufbau beschränkt. Vielmehr ist ebenso ein symmetrischer Aufbau des Trägermoduls 20 möglich. Insbesondere weist ein derartiger Aufbau auf beiden Seiten des Kernstücks 22 angeordnete Einzelelemente 28 auf, welche lösbar über Abstandshalter 26 mit dem Kernstück 22 verbunden sind.

Auf jedem Einzelelement 28 ist ein Wandlerelement 32 elastisch befestigt, um dieses von einer z.B. durch Vibrationen induzierten Belastung von dem Trägermodul 20 zu entkoppeln. Die beim Schleppen der Antenne 4 durch das Wasser entstehenden Schwingungen werden von dem über das Zugseil verbundenem Formstück somit nicht auf das Wandlerelement 32 übertragen.

In diesem Ausführungsbeispiel weisen die Wandlerelemente 32 die Form einer Kugel auf. Die Erfindung ist jedoch nicht auf derartige Piezokeramikkugeln beschränkt. Vielmehr können als Wandlerelemente 32 eine Reihe von piezoelektrischen Keramiken unterschiedlicher Formen, piezoelektrischen Polymeren sowie faseroptische Wandler eingesetzt werden.

Fig. 3 zeigt eine Draufsicht eines Trägermoduls gemäß der Erfindung jedoch ohne eine Darstellung von Einzelelementen. Die Wandlerelemente 32 werden in bekannter Weise zu einer Gruppe bzw. einem Wandler zusammengefasst, wobei die Verkabelung der Wandlerelemente 32, auch Signalleitungen genannt, sowie die Stromversorgungsleitungen über Aussparungen 36 in einer zentralen axialen Öffnung 38 durch das Trägermodul 20 geführt werden. Die zentrale axiale Öffnung 38 ist mittig in dem Kernstück 22 angeordnet und dient dazu, das Formstück auf das Zugseil der Schleppantenne aufzusetzen. Dadurch, dass das Zugseil, die Stromversorgungsleitungen und die Signalleitungen im Innern des Trägermoduls 20 einbaubar sind, entsteht vorteilhaft ein symmetrischer Aufbau des Trägermoduls 20.

Fig. 4 zeigt eine Draufsicht eines Trägermoduls gemäß der Erfindung. In dieser schematischen Darstellung sind die Einzelelemente 28 abgebildet.

Wie auch in Fig. 3 leicht angedeutet, ist auch in Fig. 4 angedeutet gezeigt, dass das Kernstück 22 von einem zylinderförmigen Modulgehäuse 40 umschlossen ist. Bevorzugt ist dieses Modulgehäuse 40 aus zwei Halbschalen zusammengesetzt.

Das Kernstück 22 weist dazu an den Außenseiten einen größeren Durchmesser auf, so dass in der so entstehenden Aussparung in der Mitte des Kernstücks 22 das Modulgehäuse 40 befestigt wird und somit in Längsrichtung fixiert ist. Bevorzugt wird das Modulgehäuse 40 mit dem Formstück verschweißt, z.B. durch Ultraschall, und durch Klettbänder zusammengehalten, wobei die Klettbänder zusätzlich der akustischen Entkopplung zur Schlauchwand dienen.

Ferner dient das Modulgehäuse 40 als Schutz vor mechanischer Beanspruchung für die darunter liegende Elektronikbaugruppe 24, bspw. beim Aufwickeln der Schleppantenne 4 auf die Trommel 6.

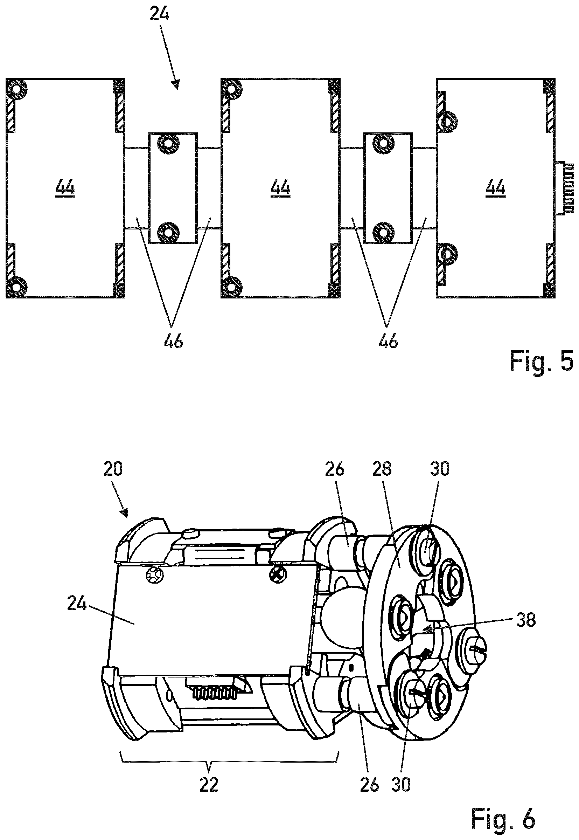

Fig. 5 zeigt eine in die Blattebene gelegte Elektronikbaugruppe. Die Elektronikbaugruppe 24 ist als flächenhafte Platten, insbesondere als Leiterplatten 44, ausgebildet, welche direkt mit den den Wandlern zugehörigen, hier jedoch nicht weiter dargestellten, Elektronikbauteilen bestückt werden. Im beschriebenen Ausführungsbeispiel sind drei bestückte Leiterplatten 44 vorgesehen, die über ein Leiterbahnen enthaltenes flexibles Band 46 miteinander verbunden sind. Dadurch lässt sich die Elektronikbaugruppe 24 radial um das Kernstück 22 anordnen. Eine derartige Leiterplattenanordnung schafft vorteilhaft eine größere Fläche für die zu verwendenden Elektronikbauteile.

Fig. 6 zeigt ein Trägermodul gemäß der Erfindung in einer perspektivischen Ansicht. Für die Montage der erfindungsgemäßen Unterwasserantenne wird eine Vielzahl der vorstehend beschriebenen Trägermodule 20 auf dem Zugseil befestigt. Hierzu werden die notwendigen Schrauben 30 an den Einzelelementen 28 zum Öffnen des Formstücks gelöst.

Zum Befestigen des Trägermoduls 20 auf dem Zugseil weist das Trägermodul 20 einen hier nicht weiter dargestellten Basisträger auf. Dieser wird zunächst an dem Zugseil festgeschraubt und dann mit diesem verklebt.

Der Basisträger weist ebenfalls eine zylindrische Form auf und ist geringfügig länger als das gesamte Formstück des Trägermoduls 20. Der im Wesentlichen kreisrunde Querschnitt eines Mittelteils des Basisträgers entspricht annähernd dem Querschnitt der axialen Öffnung 38 des Kernstücks 22 ohne die Aussparungen 36 zum Durchführen der Stromversorgungs- und Signalleitungen.

Dadurch lässt sich das geöffnete Formstück des Trägermoduls 20 axial unverschieblich auf dem Basisträger aufsetzen und mittels einer Schraube gegen Verdrehen sichern.

Nun wird das Formstück verschlossen, indem die Einzelelemente 28 über die Abstandshalter 26 an dem Kernstück 22 befestigt werden. Die Wandlerelemente 32, die auf den Einzelelementen 28 befestigt sind, erhalten somit einen symmetrischen Aufbau ihrer Umgebung.

Die zugehörigen Leitungen werden in den Aussparungen 36 der axialen Öffnung 38 durch das Kernstück 22 geführt.

Danach wird eine Abdeckung über die Längsseite des Kernstücks 22 in dafür vorgesehene Aussparungen geschoben und an diesem befestigt, um das Kernstück 22 vor einem Herunterrutschen von dem Zugseil oder dem auf dem Zugseil befestigten Basisträger zu sichern.

Anschließend werden die Leiterplatten 44 der Elektronikbaugruppe 24 um das Kernstück 22 angeordnet und befestigt, insbesondere verschraubt. Bevorzugt ist jedem Wandler eine Elektronikbaugruppe 24 zugeordnet, wobei ein Wandler durch ein oder mehrere Wandlerelemente 32 realisiert wird.

Abschließend wird das Modulgehäuse 40 durch Aufeinandersetzen der beiden Gehäusehälften verschlossen, wobei das Modulgehäuse 40 zwischen die beiden äußeren Bereiche, an denen das Kernstück 22 einen geringfügig größeren Durchmesser aufweist, eingepasst wird. Zusätzlich werden die Gehäusehälften durch Klettbänder zusammengehalten. Dadurch entsteht eine akustische Entkopplung zum Schlauch, wodurch die akustischen Eigenschaften der Antenne verbessert werden.

Die oberste Betriebsfrequenz, in der die Schleppantenne 4 operiert, ist gegeben durch den Abstand der Wandler. Um mit der Schleppantenne 4 einen Frequenzbereich abzudecken, weist die Schleppantenne 4 Bereiche mit einer verschiedenen Wandleranzahl auf. Bei einem größeren notwendigen Wandlerabstand werden zwischen den Trägermodulen 20 Leermodule in Längsrichtung der Schleppantenne 4 angeordnet. Derartige Leermodule weisen keine Wandlerelemente 32 auf und dienen der Vermeidung von Deformationen der Schlauchhülle, z.B. beim Aufwickeln auf die Trommel 6.

Bei der Verwendung langer Schleppantennen 4 ist es vorteilhaft, den Durchmesser der Schleppantenne 4 möglichst gering zu halten. Das bedeutet jedoch bei einer vorstehend beschriebenen Anordnung von drei Wandlerelementen 32 für eine Rechts-Links-Unterscheidung, dass der Abstand der Wandlerelemente 32 untereinander verringert werden muss. Ein geringerer Abstand der Wandlerelemente 32 erfordert jedoch einen besonderen Aufbau des Trägermoduls 20, wie es die Erfindung vorsieht. Mit dem erfindungsgemäßen symmetrischen Aufbau des Trägermoduls 20 ist es möglich, bei gleich bleibend guten akustischen Eigenschaften der Unterwasserantenne den Durchmesser der Schleppantenne 4 zu verringern.

## Patentansprüche

1. Trägermodul für eine akustische Unterwasserantenne (4) mit wenigstens drei elektroakustischen und/oder optoakustischen Wandlerelementen (32) zum Erzeugen von Empfangssignalen, **gekennzeichnet durch** ein aus einem Kernstück (22) und wenigstens drei Einzelelementen (28) bestehendes Formstück, wobei die Einzelelemente (28) lösbar mit dem Kernstück (22) verbindbar an mindestens einer Seite des Kernstückes angeordnet sind und zum Aufnehmen von jeweils einem Wandlerelement (32) dienen, eine gegeneinander um einen gleichen Umfangswinkel versetzte Anordnung von wenigstens drei Wandlerelementen (32), wobei die Wandlerelemente (32) jeweils einen gleichen Querabstand zur Längsachse des Trägermoduls (20) aufweisen, eine zentrale axiale Öffnung (38) in dem Formstück zum Durchführen eines Zugseils, wenigstens eine lösbare Verbindung zwischen den Teilen des Formstücks zum Öffnen oder Schließen des Trägermoduls (20) und eine den Wandlerelementen (32) zugeordnete Elektronikbaugruppe (24) für eine Signalverarbeitung der Empfangssignalen der Wandlerelemente (32), wobei die Elektronikbaugruppe (24) als Leiterplatten (44), auf denen Elektronikbauteile anbringbar sind, ausgestaltet ist und die Leiterplatten (44) mit einem Leiterbahnen enthaltenen, flexiblen Band (46) verbunden sind, wobei die Leiterplatten radial um das Kernstück angeordnet sind, sodass bei einem geringen Abstand der Wandlerelemente eine Rechts-Links- Unterscheidung eines erfassten Zieles treffbar ist.

2. Trägermodul nach Anspruch 1, **gekennzeichnet durch**
eine elastische Befestigung des Wandlerelementes (32) oder der Wandlerelemente (32) an dem Formstück.

3. Trägermodul nach Anspruch 1, **gekennzeichnet durch** jeweils einen Abstandshalter (26) zwischen den Einzelelementen (28) und dem Kernstück (22).

4. Trägermodul nach Anspruch 1 oder 3, **gekennzeichnet durch** eine Abdeckung des Kernstücks (22) zum Verschließen der axialen Öffnung (38), wobei die Abdeckung an dem Kernstück (22) befestigbar ist.

5. Trägermodul nach einem der vorhergehenden Ansprüche, **gekennzeichnet durch** ein Modulgehäuse (40), welches aus zwei Gehäusehälften zusammensetzbar ist.

6. Trägermodul nach Anspruch 5, **gekennzeichnet durch** ein oder mehrere Klettbänder zum Zusammenhalten des Modulgehäuses (40).

7. Trägermodul nach einem der vorhergehenden Ansprüche,
**gekennzeichnet durch** einen Basisträger zum Fixieren des Trägermoduls (20) auf dem Zugseil.

8. Trägermodul nach einem der vorhergehenden Ansprüche, **gekennzeichnet durch** Aussparungen (36) in der axialen Öffnung (38) des Formstücks zum Aufnehmen von Signalleitungen.

9. Akustische Unterwasserantenne, insbesondere Schleppantenne (4), mit einer schlauchförmigen Außenhaut, wobei in der Antenne in Längsrichtung ein Zugseil angeordnet ist, an dem wenigstens ein Trägermodul (20) nach einem der Ansprüche 1 bis 8 angeordnet ist.

10. Akustische Unterwasserantenne nach Anspruch 9, **dadurch gekennzeichnet, dass** das Trägermodul (20) im Wesentlichen zylindrisch mit einem Außendurchmesser, der geringfügig kleiner als der Innendurchmesser der Außenhaut der Unterwasserantenne (4) ist, ausgebildet ist.

11. Akustische Unterwasserantenne nach Anspruch 9 oder 10, **gekennzeichnet durch** eine Anordnung von Trägermodulen (20) und Leermodulen in Längsrichtung der Unterwasserantenne (4), wobei das Leermodul aus einem Formstück ohne akustische Wandlerelemente (32) besteht.

12. Verfahren zum Befestigen eines Trägermoduls (20) nach einem der Ansprüche 1 bis 8 auf einem Zugseil einer akustischen Unterwasserantenne (4) gemäß Anspruch 9 bis 11, wobei das Verfahren folgende Schritte aufweist:
a) Öffnen des Formstücks durch Lösen der zum Öffnen notwendigen Verbindungen zwischen den Teilen des Formstücks,
b) Aufsetzen des Trägermoduls (20) auf das Zugseil oder auf einen mit dem Zugseil verbundenen Basisträger und Fixieren des Trägermoduls (20),
c) Schließen des Formstücks durch Verbinden der Teile des Formstücks.

## Claims

1. Support module for an acoustic underwater antenna (4), the antenna (4) having at least three electro-acoustic and/or opto-acoustic transducer elements (32) for generating received signals, **characterized by** a shaped piece comprising a core piece (22) and at least three individual elements (28), wherein the individual elements (28) are arranged on at least one side of the core piece such that they can be can be connected releasably to the core piece (22) and are used to accommodate respectively one assigned transducer element (32), an arrangement of at least three transducer elements (32) with an offset relative to one another by an equal circumferential angle, wherein the transducer elements (32) each have an equal transverse spacing from the longitudinal axis of the support module (20), a central axial opening (38) in the shaped piece for a traction cable to be fed through, at least one releasable connection between the parts of the shaped piece for opening or closing the support module (20), and an electronic assembly (24) assigned to the transducer elements (32), the electronic assembly (24) being for signal processing of the signals received from the transducer elements (32), wherein the electronic assembly (24) is configured as circuit boards (44), to which electronic components can be attached, and the circuit boards (44) are connected to a flexible strip (46) containing conductor tracks, wherein the circuit boards (44) are arranged radially around the core piece (22) so that, given a small spacing of the transducer elements, a right/left differentiation of an acquired target can be made.

2. Support module according to Claim 1, **characterized by** a resilient fixing of the transducer element (32) or the transducer elements (32) to the shaped piece.

3. Support module according to Claim 1, **characterized by** respectively one spacer (26) between the individual elements (28) and the core piece (22).

4. Support module according to Claim 1 or 3, **characterized by** a covering of the core piece (22) for closing the axial opening (38), wherein the covering can be fixed to the core piece (22).

5. Support module according to one of the preceding claims, **characterized by** a module housing (40), which can be assembled from two housing halves.

6. Support module according to Claim 5, **characterized by** one or more hook and loop strips for holding the module housing (40) together.

7. Support module according to one of the preceding claims, **characterized by** a base carrier for fixing the support module (20) to the traction cable.

8. Support module according to one of the preceding claims, **characterized by** recesses (36) in the axial opening (38) of the shaped piece to accommodate signal lines.

9. Acoustic underwater antenna, in particular a towed antenna (4) having a tubular outer skin, wherein a traction cable, to which at least one support module (20) according to one of Claims 1 to 8 is arranged, is arranged in the longitudinal direction in the antenna.

10. Acoustic underwater antenna according to Claim 9, **characterized in that** the support module (20) is substantially cylindrical with an outer diameter which is slightly smaller than the inner diameter of the outer skin of the underwater antenna (4).

11. Acoustic underwater antenna according to Claim 9 or 10, **characterized by** an arrangement of support modules (20) and empty modules in the longitudinal direction of the underwater antenna (4) wherein the empty module consists of a shaped piece without acoustic transducer elements (32).

12. Method for fixing a support module (20) according to one of Claims 1 to 8 to a traction cable of an acoustic underwater antenna (4) according to Claim 9 to 11, wherein the method comprises the following steps:
a) opening the shaped piece by loosening the connections between the parts of the shaped piece required for opening,
b) positioning the support module (20) on the traction cable or a base carrier connected to the traction cable and fixing the support module (20),
c) closing the shaped piece by connecting the parts of the shaped piece.

## Revendications

1. Module de support pour une antenne acoustique sous-marine (4) avec au moins trois éléments de transducteur électroacoustiques et/ou opto-acoustiques (32) pour produire des signaux de réception, **caractérisé par** une pièce moulée composée d'une pièce de noyau (22) et d'au moins trois éléments individuels (28), dans lequel les éléments individuels (28) pouvant être assemblés de façon séparable à la pièce de noyau (22) sont disposés sur au moins un côté de la pièce de noyau et servent à recevoir chacun un élément de transducteur (32), par un agencement d'au moins trois éléments de transducteur (32) décalés l'un par rapport à l'autre d'un angle périphérique identique, dans lequel les éléments de transducteur (32) présentent respectivement une distance transversale égale par rapport à l'axe longitudinal du module de support (20), par une ouverture centrale axiale (38) dans la pièce moulée pour le passage d'un câble de traction, par au moins un assemblage séparable entre les parties de la pièce moulée pour l'ouverture ou la fermeture du module de support (20) et par un ensemble électronique (24) associé aux éléments de transducteur (32) pour un traitement de signal des signaux de réception des éléments de transducteur (32), dans lequel l'ensemble électronique (24) est formé par des plaquettes de circuits imprimés (44), sur lesquelles des composants électroniques peuvent être montés, et les plaquettes de circuits imprimés (44) sont reliées à une bande flexible (46) contenant des pistes conductrices, dans lequel les plaquettes de circuits imprimés sont disposées radialement autour de la pièce de noyau, de telle manière qu'une distinction droite-gauche d'une cible détectée soit réalisable à courte distance des éléments de transducteur.

2. Module de support selon la revendication 1, **caractérisé par** une fixation élastique de l'élément de transducteur (32) ou des éléments de transducteur (32) sur la pièce moulée.

3. Module de support selon la revendication 1, **caractérisé par** un élément d'écartement respectif (26) entre les éléments individuels (28) et la pièce de noyau (22).

4. Module de support selon la revendication 1 ou 3, **caractérisé par** un recouvrement de la pièce de noyau (22) pour la fermeture de l'ouverture axiale (38), dans lequel le recouvrement peut être fixé sur la pièce de noyau (22).

5. Module de support selon l'une quelconque des revendications précédentes, **caractérisé par** un boîtier de module (40), qui peut être composé de deux moitiés de boîtier.

6. Module de support selon la revendication 5, **caractérisé par** une ou plusieurs bande(s) Velcro pour l'assemblage du boîtier de module (40).

7. Module de support selon l'une quelconque des revendications précédentes, **caractérisé par** un support de base pour la fixation du module de support (20) sur le câble de traction.

8. Module de support selon l'une quelconque des revendications précédentes, **caractérisé par** des découpes (36) dans l'ouverture axiale (38) de la pièce moulée pour y loger des câbles de signalisation.

9. Antenne acoustique sous-marine, en particulier antenne traînante (4), avec une peau extérieure en tuyau flexible, dans laquelle un câble de traction est disposé en direction longitudinale dans l'antenne, sur lequel est disposé au moins un module de support (20) selon l'une quelconque des revendications 1 à 8.

10. Antenne acoustique sous-marine selon la revendication 9, **caractérisée en ce que** le module de support (20) est de forme essentiellement cylindrique, avec un diamètre extérieur qui est légèrement plus petit que le diamètre intérieur de la peau extérieure de l'antenne sous-marine (4).

11. Antenne acoustique sous-marine selon la revendication 9 ou 10, **caractérisée par** un agencement de modules de support (20) et de modules vides en direction longitudinale de l'antenne sous-marine (4), dans laquelle le module vide est constitué d'une pièce moulée sans éléments de transducteur acoustiques (32).

12. Procédé de fixation d'un module de support (20) selon l'une quelconque des revendications 1 à 8 sur un câble de traction d'une antenne acoustique sous-marine (4) selon une revendication 9 à 11, dans lequel le procédé présente les étapes suivantes:
a) ouvrir la pièce moulée par séparation des assemblages entre les parties de la pièce moulée nécessaires pour l'ouverture;
b) poser le module de support (20) sur le câble de traction ou sur un support de base assemblé au câble de traction et fixer le module de support (20),
c) fermer la pièce moulée par assemblage des parties de la pièce moulée.
